# EUROPEAN PATENT APPLICATION

(11) **EP 2 237 211 A1**
(43) Date of publication of application: **06.10.2010**
(21) Application number: 09003627.8
(22) Date of filing: 12.03.2009
(51) Int. Cl.: G06Q 30/00

(54) **Method for providing location and promotional information associated with a building complex**

(71) Applicant: Lu, Hung Sung, Atlanta GA 30339 (US); Jackson, Carnese Darrell, Atlanta GA 30350 (US)
(72) Inventor: Lu, Hung Sung, Atlanta GA 30339 (US); Jackson, Carnese Darrell, Atlanta GA 30350 (US)
(74) Representative: von Hellfeld, Axel

(57) **Abstract**

A method for providing location and promotional information to a visitor to a building complex in an interactive environment where said visitor may select either form a variety of pre-defined search a parameters or select a specific location on a dynamic computer-generated rendering of the building complex.

## Description

The present invention is concerned with a method of disseminating location and promotional information associated with specific locations within a building complex.

In particular, the present invention is concerned with the afore-mentioned method and a system adapted and programmed to perform said method.

### BACKGROUND OF THE INVENTION

The present invention relates to the field of providing location and promotional information for a building complex in an interactive environment based upon visitor entry of pre-defined search parameters.

Ever since the advent of large-scale building complexes such as shopping malls, office buildings, hotels, and hospitals, there has been a corresponding need to provide people who are unfamiliar with the structure's layout with directions to specific locations and information corresponding to these locations, such as promotions, specials and events. "Building complex" is defined in this specification to mean, without limitation, a single building, structure or group of buildings or structures having a common theme or purpose, such as a shopping mall, hospital, airport, or even an amusement park.

Currently, the means for providing directions to a location within a building complex are inefficient, often involving significant expense. Hospitals, hotels, airports, and malls employ receptionists or other staff to furnish directions and information on promotions and special events to newcomers, but this method can be expensive and inefficient. Two-dimensional maps are less expensive to employ than informational staff. However, these maps may be difficult for some visitors to comprehend, are not interactive, are infrequently updated, and are costly to update. Thus, operators of large building complexes are faced with a dilemma: either employ expensive reception staff or utilize maps which are inefficient in conveying information that visitors need.

Another problem faced by consumers, event planners, building managers, and marketers is how to efficiently disseminate and display information relevant to visitors. This information can involve advertising, special promotions, and events that occur within the building complex. Currently, bulletin boards, flyers, advertising message boards, and other physical and electronic methods can be used to communicate information relating to product advertising, specials offers, and special events. And while all of these methods may involve dissemination of the location and directions to these events, none of these methods are very efficient.

Various attempts have been made to create an interactive visitor interface to provide the types of information discussed above. U.S. Patent No. 7,243,024 "Computer-Implemented System and Method for Wayfinding" discloses a method for connecting a series of kiosks so that a visitor can scan a bar code at various kiosks and receive directional information to route the visitor to the visitor's destination within the building. U.S. Patent Application No. 20050044061 "Method and system for providing interactive business directory services" discloses an interactive Internet-based electronic business directory housing advertisements that people can access via an internet connection, a telephone, or a cellular phone. U.S. Patent No. 7,265,755 "Method and Apparatus for Distributing Audiovisual Content" discloses a method to place advertisements on monitors throughout a store.

However, there is a need to synthesize the function of assisting a visitor in finding location within a large structure using an intuitive, two or three-dimensional format and the function of allowing a visitor to search for promotional data associated with that location. However, the prior inventions and methods do not allow the visitor to tailor his searches including search terms for the current location and then receive a three-dimensional map that can be printed out for the visitor to use as a guide in finding his destination.

### SUMMARY OF THE INVENTION

The present invention solves these problems by synthesizing promotion, event, or other information and directions tailored to the visitor from an interactive computer database with a three-dimensional map of that can be printed out. Synthesizing three-dimensional location information and directions with event-related information is intuitive and allows the visitor to quickly find not only desired information corresponding to specific locations within a large building complex, but also to obtain directions to these locations efficiently. Moreover, promotional and event information can be continuously updated by clients of the system. This system is beneficial to both consumers and merchants because it maximizes search efficiency. Maximum search efficiency results from the consumer being able to not only quickly find out what specials are available, but from the ability to quickly locate where these specials are within the three-dimensional environment. This system benefits merchants because it allows them to quickly draw consumers by not only enticing them with specials, but also by having visitors spend the minimum amount of time searching for the merchant's location. It also benefits merchants and building managers because information associated with various locations of interest to visitors within the building complex can be quickly and easily updated using currently-available information technologies.

It is therefore an object of this invention to provide a method of improving the dissemination of directions to visitors in a building complex via a three-dimensional map of the complex.

It is another object of this invention to provide a method to provide for an interactive search medium for a visitor to determine his location within an infrastructure.

It is another object of this invention to provide a method for a building complex tenant to reduce the cost of advertising and promotional materials.

It is another object of this invention to provide a method for reducing the time it takes for a visitor to locate his destination.

It is another object of this invention to provide a method for improving the speed at which a visitor can locate his destination upon entering an infrastructure.

It is another object of this invention to provide a method for optimizing the use of promotional materials by a building complex tenant.

It is another object of the invention to provide a method for optimizing the use of informational materials by a third party that is located within the confines of an infrastructure.

It is another object of the invention to reduce capital expenses.

It is another object of this invention to improve the efficiency of a visitor to a building by allowing the visitor to easily locate his destination within the building.

### BRIEF DESCRIPTION OF THE DRAWINGS

Further objects of this invention, together with additional features contributing thereto, and advantages accruing therefrom, will be apparent from the following description of the preferred embodiment of the invention when read in conjunction with the accompanying drawings wherein:

FIG. 1 shows the method implemented using a basic LAN configuration with both hardwired and wireless standalone personal computers (PCs) used as visitor display terminals (VDTs).

FIG. 2 shows the method implemented using a basic LAN configuration with both hardwired and wireless dumb terminals connected via a router/hub and/or wireless access to a Building Site Data Web Server (BSDWS).

FIG. 3 shows the method embodiment envisioned for a commercial building such as a shopping center or hotel.

FIG. 4 shows the method embodiment envisioned for a health care or other non-commercial facility.

FIG. 5 is a flowchart showing the method embodiment for a visitor search for specific location(s) using a category search.

FIG. 6 is a flowchart showing the method embodiment for a visitor search for specific location(s) using a keyword search.

FIG. 7 is a flowchart showing the method embodiment for a visitor search for specific location(s) using a Promotion search.

FIG. 8 is a flowchart showing the method embodiment for a visitor search for specific location(s) using a Location search.

FIG. 9 is a flowchart showing the method implemented in a hospital setting where the visitor is a patient desiring to check in for an appointment.

FIG. 10 is a flowchart showing the method used to update promotional information in the system database.

FIG. 11 is a diagram showing a typical arrangement of promotional information on the VDT display for a category search.

### DETAILED DESCRIPTION OF THE INVENTION

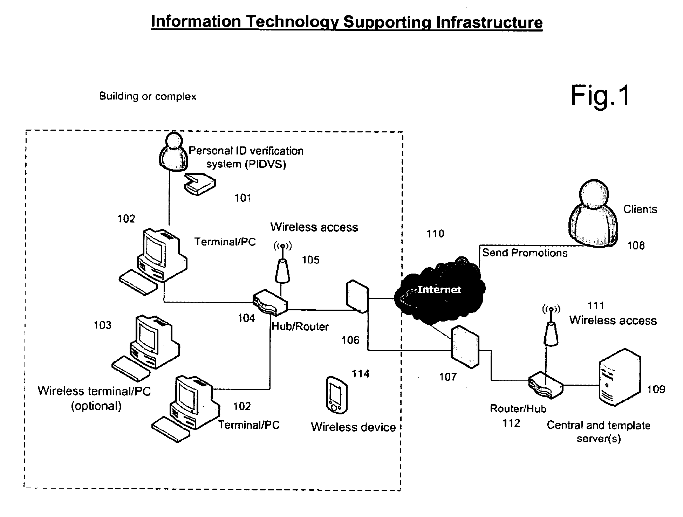

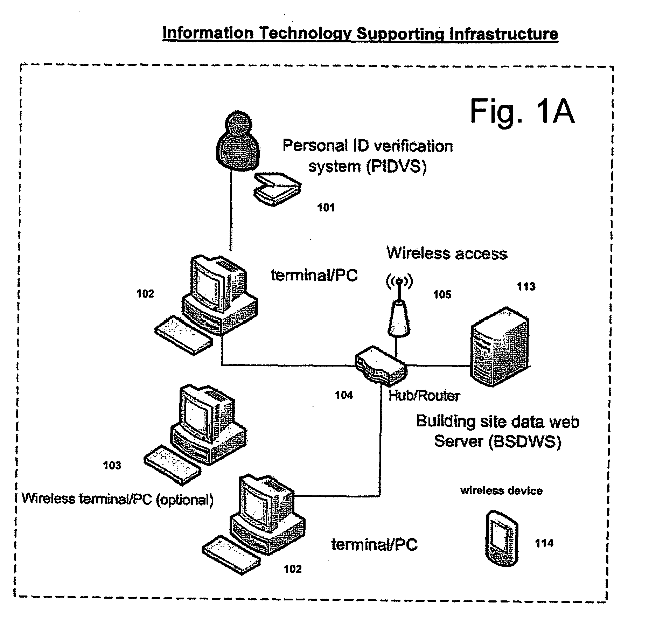

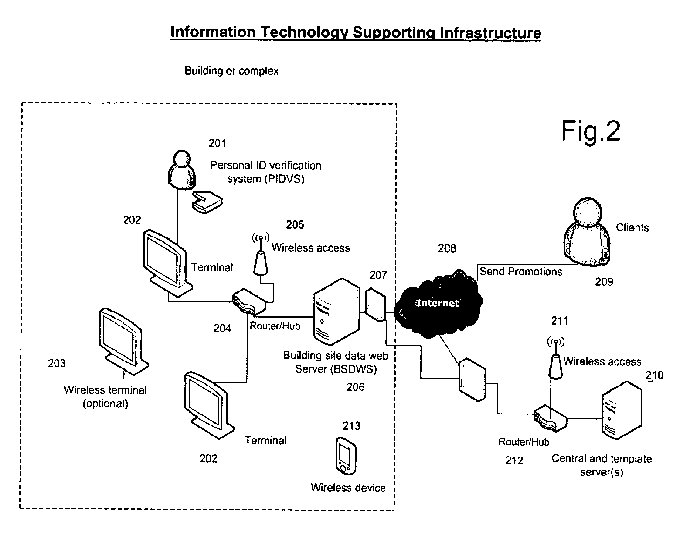

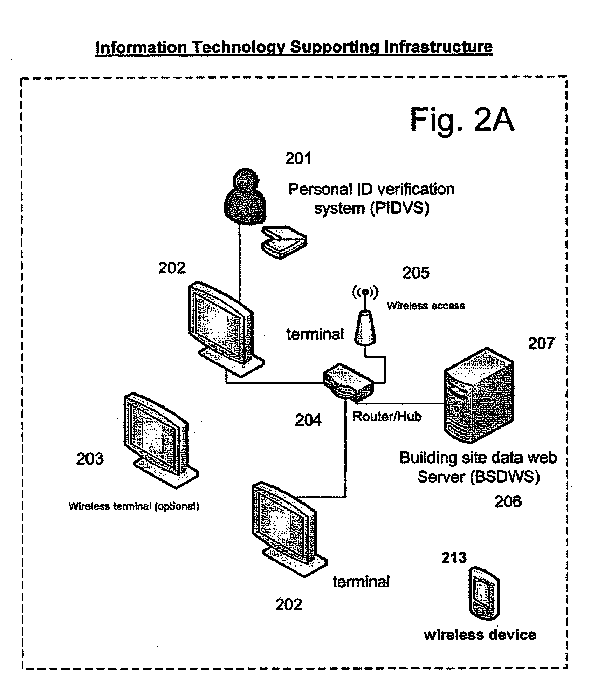

As shown in Figs 1, 1A, 2, and 2A, a visitor interacts with the system using Visitor Display Terminals (VDTs) 102, 103, 202, 203. VDTs can be either terminal/PCs 102, 103 or dumb terminals 202, 203. Terminal/PCs are standalone personal computers where location and promotional data is stored on each personal computer's internal hard drive or other internal memory device. By contrast, a dumb terminal is merely an input-output device containing no internal memory storage. VDTs 102 (PC/terminal) and 202 (dumb) shown in Figs. 1 and 2 are part of a local area network (LAN), connected to a hub/router 104, 204, which in turn is connected to the Central and Template Server (CTS) 109, 211 via the Internet 110, 208. Figs. 1A and 2A show a stand-alone configuration, where a Building Site Data Web Server (BSDWS) 113, 206 stores all the location and promotion information on-site within the building complex; in this embodiment, the BSWDS is the master database, rather than the CTS. As used in this specification, LAN refers to a network of interconnected computers confined to a small geographic area, such as within the confines of a building complex. A Wide Area Network (WAN), by contrast, refers to a network of interconnected computers spanning a wide geographic area. Although a star LAN topology is shown in Figs. 1, 1A, 2, and 2A, ring, bus, or other LAN topologies may be used. Wireless terminals 103, 203 are connected to the router using short-range wireless technology 105, 205 such as Wi-fi. VDTs can be either dumb terminals or PC/terminals; however, the term "terminal" is used to generally refer to any input-output device used as a VDT.

In one embodiment, the CTS 109, 211 is the master database located in a network operations center which contains all building layout and promotional information associated with individual locations within a building complex. Building layout includes the two- or three-dimensional structural information associated with a building complex. The CTS can be accessed via the Internet, 110 by clients 108, 209 of the system to update promotional information. Clients may also access the CTS using a suitable long-range wireless technology, 111, such as WiMAX. Terminal/PCs 102, 103 access the CTS periodically to update promotional and building layout information via a hub/router 104 and the Internet 110, but may store building layout and promotional information locally in their internal memory. By contrast, dumb terminals 202, 203 are connected directly to a BSDWS 206 to access location and promotion information. The BSDWS is located within the building complex and also functions as an on-site database. The BSWDS may be connected, via the Internet 208, to the CTS, 211, from which it receives updates on building and promotional information, although as mentioned above in one embodiment of the system, the BSWDS is a stand-alone master database. As shown in Figs. 1A and 2A, the BSWDS 113, 206 may act as a stand-alone master database in situations where connection to the CTS via the Internet is undesirable or unnecessary. For instance, in a hospital context, the hospital management will be the only client updating promotional information provided to visitors; therefore, connection to an external master database is unnecessary because the master database can be updated on-site using computers connected to the BSWDS via a LAN. As used in this specification, "Internet" refers to a collection of interconnected public and/or private networks linked together by a set of common protocols (for example TCP/IP and HTTP) to form a distributed, global computer network, and to any future variations, including and encompassing changes and additions to existing common protocols.

Location and promotional information is disseminated to the visitor in a variety of ways, once the visitor has identified a location of interest along with its associated promotional information. First, location and promotional information is displayed on VDTs 102, 103, 202, 203. The visitor also has the option to print out this information using a printer attached to the VDTs. In addition, the visitor may receive information using a wireless device 114, 213 using Bluetooth or a similar wireless technology. This allows visitors to receive location and promotional information directly on a wireless device such as a cell phone, personal data assistant (PDA) such as an iPhone^{®}. Thus, a visitor may select to have location and promotional information provided either in printed (i.e. hard-copy) format, or in electronic format, downloaded directly onto a personal electronic device.

"Promotional information" as used in this specification can mean, without limitation, any information that is displayed in association with a particular location that is stored in the system database that is provided to the visitor along with two- or three-dimensional location information. This information can take the form of graphics, sound, text, video, or a multimedia combination of these. For example, in the commercial context promotional information can mean an advertisement or other information relating to specials, offers, or sales on merchandise offered in a particular store location within the building. It can also mean event information associated with a specific location, or any other information that can be associated with a specific location or locations of interest within the structure. This information will be presented to a visitor on the VDT display, when the visitor selects certain parameters that correspond with this information.

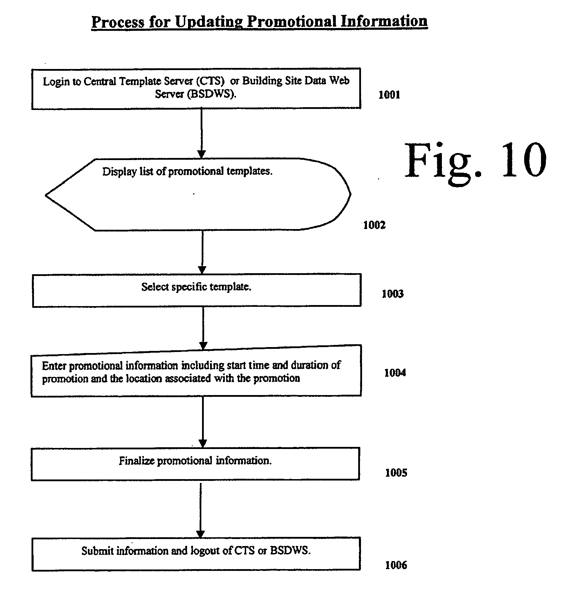

Promotional data is provided and updated by clients. A client is any person other than a visitor who provides and updates promotional data including a building complex tenant, owner, or manager. For example, a client may be an individual store, mall, airport, or hotel management, or even the competitor of an individual store or business. Clients may update their promotional information at any time. In the preferred embodiment, clients update their promotional information online using a computer terminal, as shown in Figs. 1, 2, and 10. The client 108, 209 logs on to the Central and Template Server 109, 211, 1001. The client is presented with a list of pre-defined templates 1002. Once the client selects a particular template 1003, promotional details such as the type of promotion, the effective time period of the promotion, and more detailed information regarding the promotion are entered, 1004. This data is then finalized, 1005, and the client is prompted to select specific spots for promotion on the VDTs, 1006. As mentioned above, a client may also update information directly on-site, without accessing the off-site Central and Template Server, by accessing the Building Site Data Web Server (BSDWS) 113, 206.

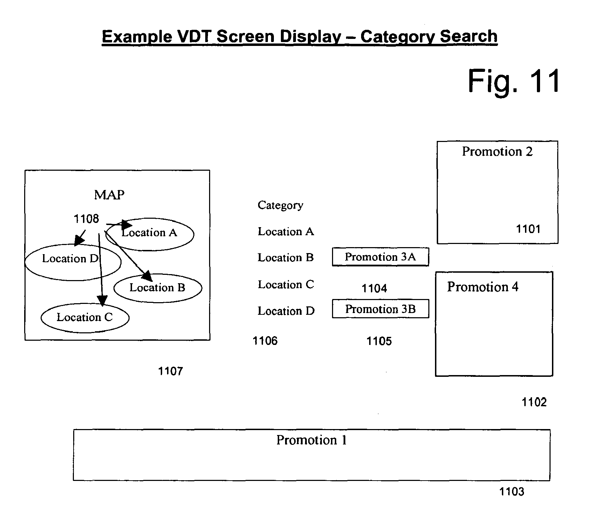

In the preferred commercial embodiment, clients pay for placement of promotional data. As shown in Fig. 11, the VDT display that the visitor sees contains a plurality of promotion spots 1101, 1102, 1103, 1104, 1105, defined as an area where promotional information is displayed. Some spots 1104, 1105 are adjacent to the text listing of individual locations within the building complex (called "individual spots") and display promotional information corresponding to an individual location. Others 1101, 1102, 1003 are displayed on the top, bottom, or sides of the display (called the "side spots"), similar to the way "banner ads" are displayed on a website. The individual spots are generally smaller than the side spots. Also, although all spots are dynamic in the sense that they change as the visitor selects different search inputs, the side spots are temporally dynamic in the sense that they will display an item of promotional information for a set period of time (i.e. 15 seconds) before displaying a different item of promotional information. Thus, depending on how much time a visitor spends on a particular search level, the visitor may see multiple ads in the same side spot. A client may bid to have promotional information displayed in a certain time block. The effect of this is to increase the amount of revenue that can be generated from selling side spots. Thus, there is a one-to-many relationship between any particular item of promotional information and a specific location within the building; promotional information may be associated with more than one location within the building. For example, if a visitor to a shopping mall is interested in a particular clothing store, the visitor will receive promotional information regarding that store on the display, but may also receive promotional information on a competing store in another part of the display, depending on whether the competing store paid to have the promotional information inserted in the display's side spots. In addition, clients may also pay to have their promotional and location information disseminated to the visitor.

Once this information is submitted and finalized, the client may then log out, 1006. Once promotional information is submitted in this fashion, it then becomes available for use by the visitor. Although online updating is ideal, clients may also update their promotional information by submitting it in hard-copy format or even over the phone to personnel maintaining the CTS database, where the promotional information can be entered into the CTS directly.

The preferred method has the visitor select from among a plurality of pre-defined parameters using a flat-panel touch-screen display, although any type of display and any means for selecting objects or text on a screen can be used, including without limitation, a mouse, track ball, joystick, or stylus. The computer-generated rendering of the building's structure in the display is not static as the visitor refines their search for a particular location or locations, but dynamically changes with the selections the visitor makes. Generally, as the visitor moves from higher (i.e. more general) search levels to lower (i.e. more specific) search levels, the two- or three-dimensional rendering of the building will adjust to display visitor-selected locations of interest from the most desirable perspective. A two-dimensional rendering is a bird's eye view or map of the building complex, while a three-dimensional rendering displays the building in a three-dimensional, (i.e. isometric) format. This adjustment may involve zooming in or out, rotating, or translating the building's rendering, depending on the selection the visitor makes, and the visitor's current location within the building complex, to provide the visitor with the viewpoint of the building complex that best displays to the visitor all individual locations of interest based on the visitor's selection.

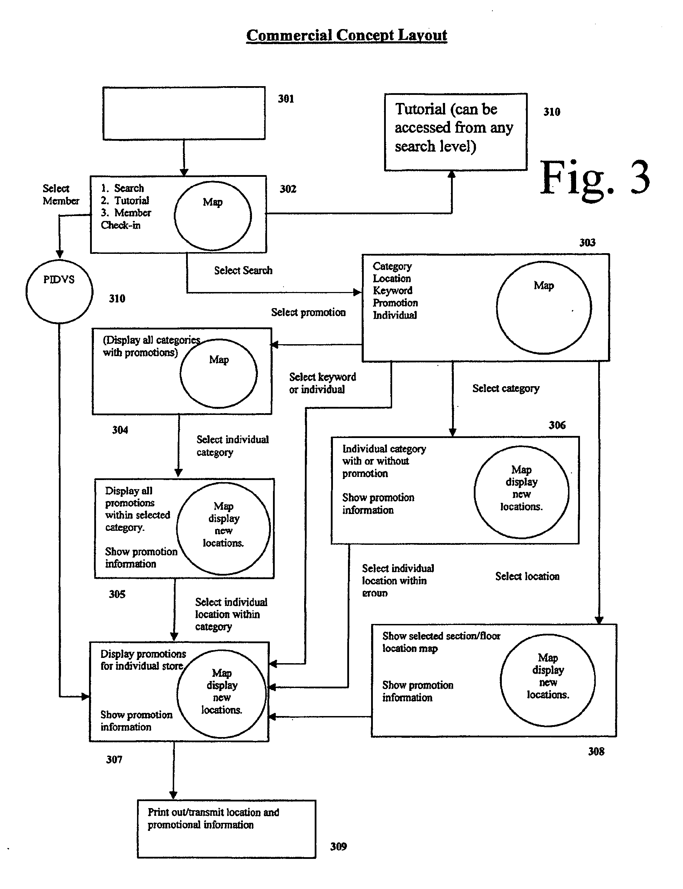

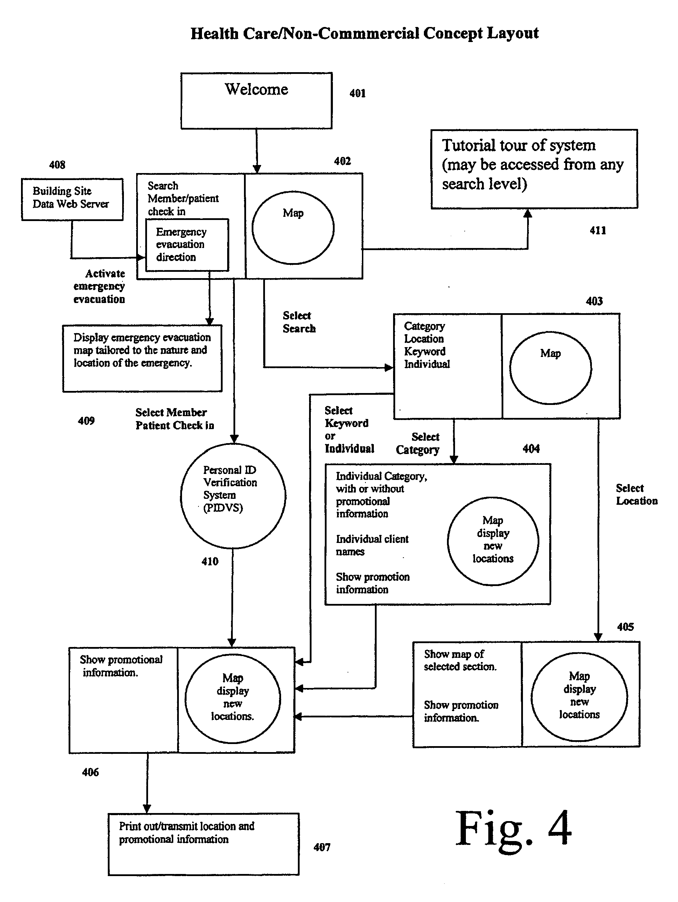

The visitor to a building complex is initially presented with a welcome screen 301, 401 on the terminal display. The welcome screen display may contain a computer-generated graphic rendering of the building complex as well as text 302, 402. The visitor has the option to select from among several pre-defined choices, such as "Search", "Tutorial", "Member Check-in" or "Patient Check-in", as shown in Figures 3 and 4. In the preferred embodiment, buttons enabling the visitor to navigate the screens appear on every screen, regardless of which search level the visitor is currently at. These buttons are equivalent to the common Web-browser navigation buttons "Forward", "Back", and "Home", and allow the visitor to move between the current and previously-visited search levels.

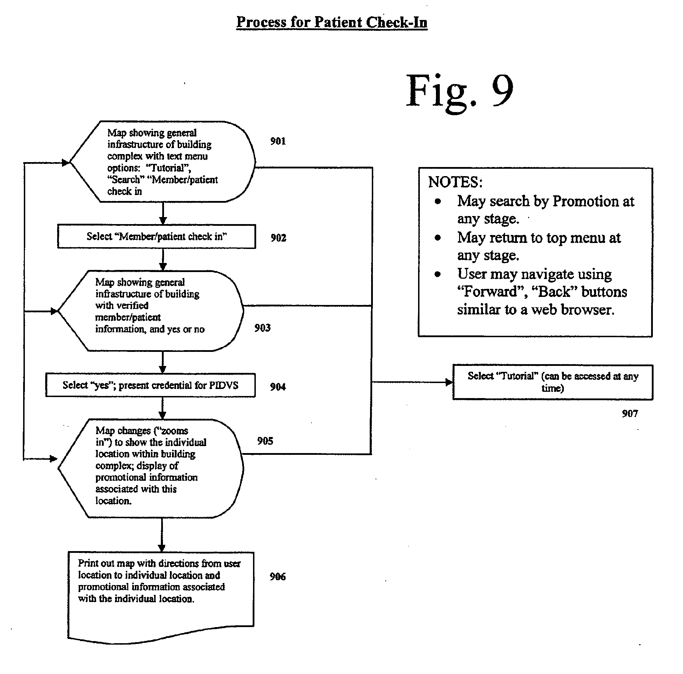

As shown in Figs 1 through 4 and Fig 9, the visitor has the option to select 302, 402, 902, "Patient Check-in" or "Member Check-in" using a Personal ID Verification System (PIDVS) 101, 201, 310, 410. The PIDVS allows a special category of visitor to be quickly provided with location and promotional information that is relevant or otherwise specifically tailored for a particular visitor. The PIDVS is a device associated with a VDT which identifies a particular visitor using a laser bar code scan, radio frequency identification (RFID), biometric scan, magnetic strip reader, or other similar means. In the preferred embodiment, a visitor presents a credential that uniquely identifies that individual, whether a card, fob, ticket, or body part (in the case of a biometric PIDVS), which is detected and read by the PIDVS. The visitor then immediately receives promotional and location information associated with this particular user 307, 406, 905. This particular feature has many uses. For example, in the hospital context, a patient receiving an appointment confirmation can be given a credential, which the visitor then presents at a VDT 410 located near the entrance to the hospital. Upon detection and identification of the patient, the VDT may display directions to the doctor's office within the hospital where the patient has an appointment, along with other related information such as directions to restrooms, the cafeteria, or the pharmacy 406. In an airport, a passenger attempting to find their way to a departure gate may scan their ticket in the PIDVS and receive directions to that gate, as well as promotional information regarding restroom locations, food, and smoking areas. In the commercial context, the PIDVS may be used to identify and provide location and promotion information to visitors who frequent certain commercial locations. Data is collected on individual visitors' preference which is stored on either the BSDWS or CTS. This data includes the individual locations most frequented by the individual visitor. By storing the data, the method envisions providing the visitor with promotional data tailored to the individual visitor. For example, if a particular visitor to a shopping mall habitually visits certain clothing stores, the VDT will store and associate this data with this particular visitor. When the visitor subsequently returns and identifies themselves using the PIDVS, promotional data associated with the stores that were visited previously will be displayed automatically. This allows the system to provide the most relevant promotional information to visitors who use the PIDVS.

Selecting the "Tutorial" option invokes a subroutine 310, 411 demonstrating the different features of the system, and instructing the visitor in the use of the system. This "Tutorial" option is available at all search levels. Selecting the "Search" option brings the visitor to the highest search level. This search level allows the visitor to select among the most general search categories. There are several such general search categories: "Category", "Location", "Keyword", and "Promotion", as shown in Fig. 3

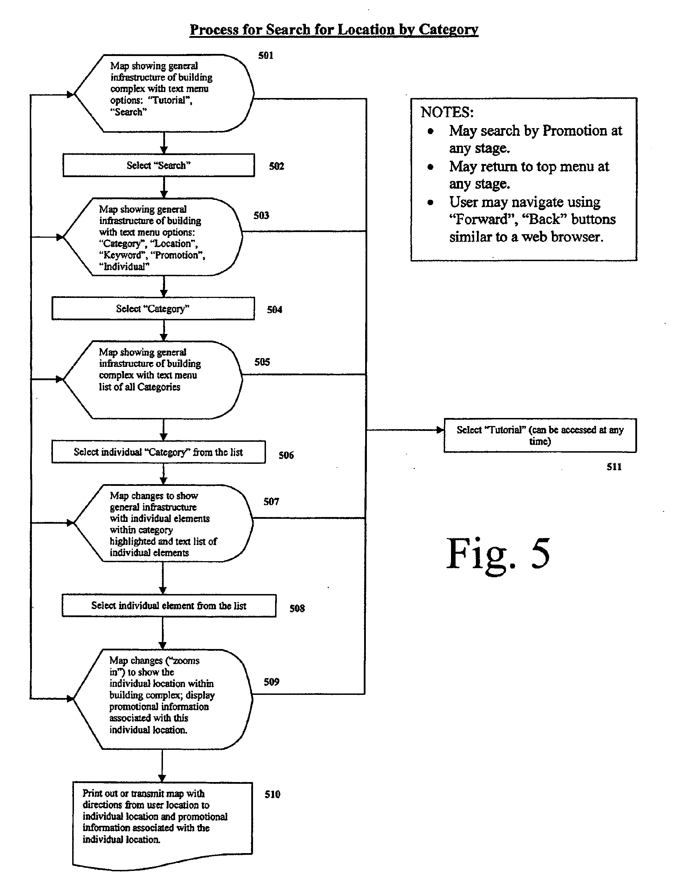

A Category refers to a general category or class of individual location sharing a common characteristic. For example, in the shopping mall context, a Category could relate to the type of merchandise sold in a particular store location within the mall. Thus, a shopping mall type category listing could be: Shoe Stores, Electronics Stores, Book Stores, Food and Restaurants, Department Stores, and so on. In the hospital context, a Category may refer to type of medicine practiced, such as Oncology, Cardiology, Neurology, etc. As shown in Figs. 3, 4, and 5, the visitor selects "Search" 302, 402, 502 and "Category" 303, 403, 504 and is presented with a display 306, 404, 505 of a map showing the general infrastructure of the building complex along with a listing of the different Categories appropriate to that building. Once the visitor selects a particular Category 506 (i.e. Book Stores), a list of the individual elements in that Category is shown on the display 507, and the locations of these individual elements on the map is highlighted on the display, as well as any information on promotions or events corresponding to these individual elements. Finally, the visitor selects 508 either the text representing the name of the individual element or selects (i.e. by touching, or using a cursor) the element's location on the map. This results in the individual element's location and promotional data associated with this particular location being displayed to the visitor on the display 307, 406, 509. The map also readjusts to give the visitor a better view of the location of interest. The visitor can then obtain directions from the visitor's current location to that store, or may receive a hard-copy print out of promotional information, 309, 407, 510. As mentioned previously, the "Tutorial" option 310, 411, 511 may be accessed from any screen.

Thus, using the shopping mall context as an example, a visitor interested in quickly locating book stores would select "Search", "Category", and then "Book Stores". Each book store's location would then be highlighted on the three-dimensional map and information regarding promotions or events for these stores will be displayed. Once the visitor has selected a particular store, the information for that store will be shown, as well as its pinpoint location within the mall, which can then be printed out by means of a printer associated with that terminal.

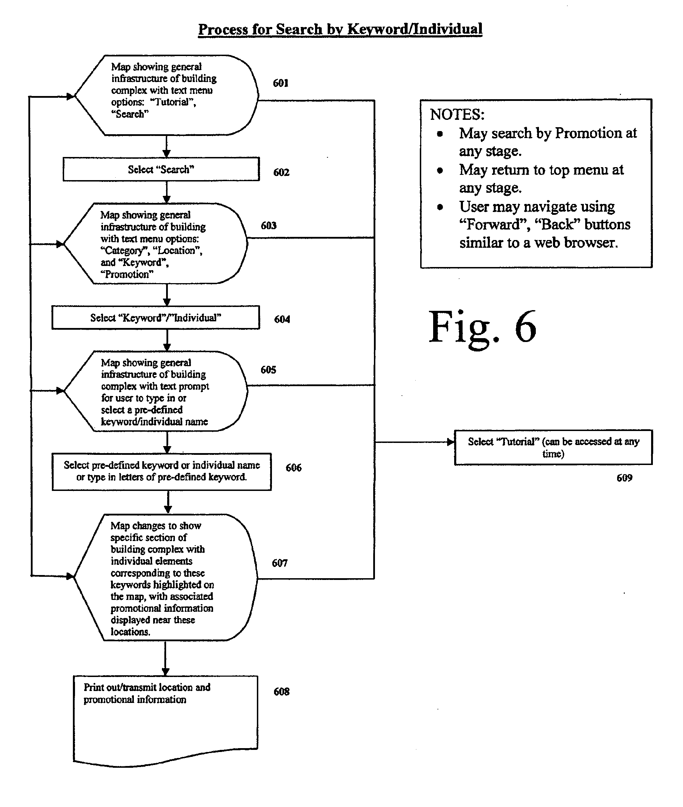

Fig. 6 shows how the visitor may search for a specific location within a building by selecting from a plurality of pre-defined keywords displayed in a list. A visitor may also search for an individual tenant (or person, in the case of a hospital of office building) by name. As in the previous search procedures, the visitor selects "Search" 302, 402, 602, and "Keyword" (or "Individual") 303, 403, 604, at which point a keyboard is displayed on the touch-screen (if touch-screen is used; otherwise, a keyboard may also be used as an input, depending on the terminal configuration). Typing in letters causes the pre-defined keywords (or names, in the case of a search by Individual) associated with these letters to be displayed in the list. The visitor then either selects directly from the pre-defined list of keywords/individual names 606 and the terminal display then lists all locations in the building complex corresponding to this keyword/individual name, with these specific locations highlighted graphically (i.e. with bright lines/text, different color, etc.). The purpose of this display is to highlight for the visitor all locations corresponding to the particular keyword entered/selected on the dynamic computer-generated rendering of the building complex. The visitor then selects an individual location by either selecting a highlighted location on the dynamic computer-generated rendering of the building complex, or selecting the specific location's listing in the display, and the location and promotion information associated with that location is then displayed for the visitor 307, 406. The visitor has the option to print the map and/or location information, 309, 407, 608. As mentioned above, the "Tutorial" option is available at any time during a keyword search, 310, 411, 609.

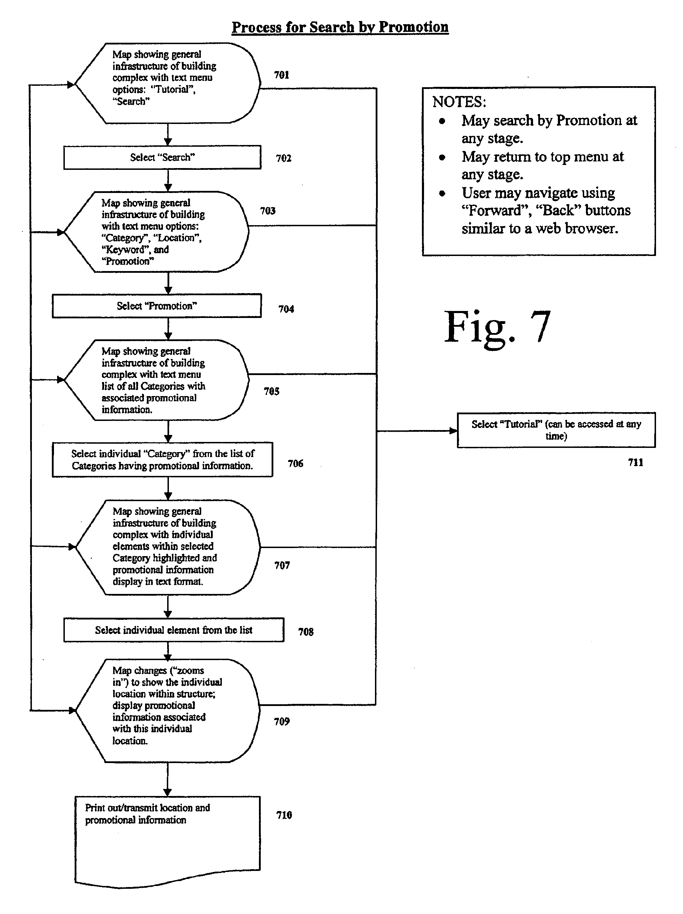

A visitor may also search by promotion, as shown in Fig 7. After selecting "Search" 302, 402, 702 and "Promotion" 303, 403, 704 from the opening menu, the visitor is prompted to select from a list of Categories on the display 304, 706 that have associated promotional data. As described above, "promotional data" can include product sales, specials, or special events associated with a specific location. The display also shows all locations of interest that have associated promotional data highlighted on the map of the building. Only Categories with associated promotional data are displayed in the display 304; if there is a Category for which there is no promotional data, this Category will not be listed in the display listing. After the visitor selects a specific Category, the display presents a list of locations of interest within that Category 305, and these locations are highlighted on the map; that is, all locations on the map within the selected Category that have promotional data associated with them are highlighted on the map and these locations are listed on the display. The visitor then selects one of these locations and the display will change to highlight this location, and the specific promotional data and directions from the visitor's current location to this specific location of interest is displayed 307, and may be printed out using the printer associated with the VDT 309.

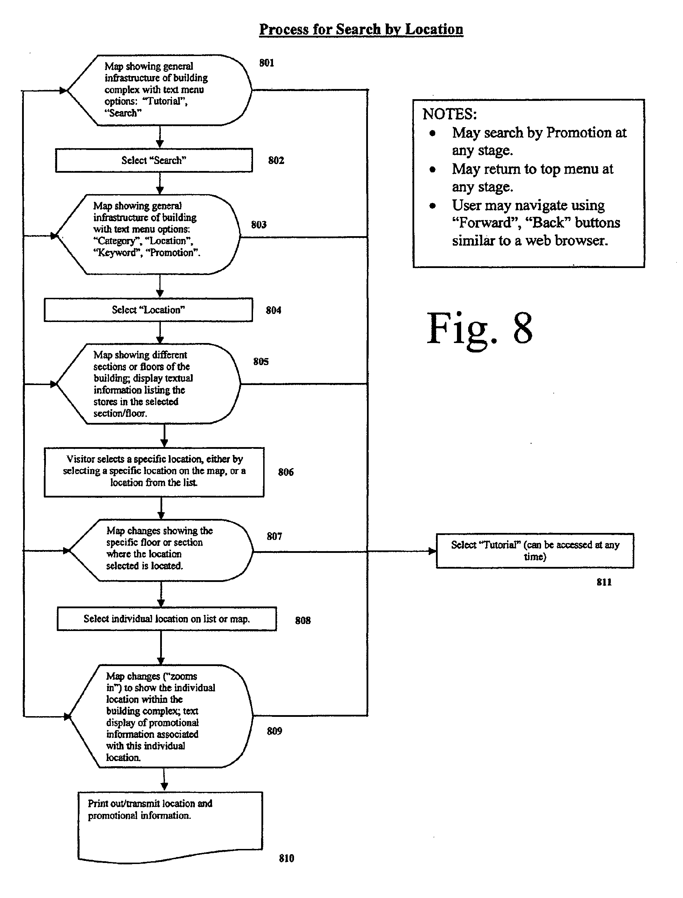

As shown in Figs. 3 and 8, selecting "Location" allows the visitor to search the building by manually selecting locations on the building map, preferably using the touch-screen interface on the terminal, although a mouse-cursor system or any other conceivable method of selection may be used. To begin, the visitor selects a large region of the building from the largest-scale rendering of the building 308, 405, 806. This process of directly selecting a specific area or floor on the dynamic computer-generated rendering of the building complex is repeated until the visitor has narrowed down the search to an ultimate location 307, 406, 808. Once the visitor has selected a specific location, the system will display relevant information regarding this location, including its location within the overall building complex, directions from the visitor's current location to this ultimate location, and promotional information associated with this location. This information, along with directions to this location from the visitor's present location, can then be printed out by a printer connected to the VDT.

In addition to the visitor searches described above, the system has the capability of displaying emergency evacuation information to visitors. The BSWDS 408 is linked to the building emergency alarm system via an Ethernet or similar networking technology to cause the VDTs to display emergency evacuation information 409 when an alarm is triggered. Depending on the capabilities of the building emergency alarm system, the evacuation information can be tailored to the type and location of the emergency. For example, if a fire is located in a particular area of the building, the evacuation directions can be tailored to route evacuating persons away from the affected area. Thus, the promotional information in this instance would be evacuation information and can be tailored to the location of the emergency.

## Claims

1. A method of disseminating location and promotional information associated with specific locations within a building complex, comprising:
Providing a visitor to a building complex with at least one display of a dynamic computer-generated rendering of said complex and a display of at least one list containing a plurality of pre-defined search parameters;
Allowing said visitor to either select a series of parameters from said pre-defined search parameters, or to select a series of specific locations on said rendering;
Associating said selections of said visitor with one or more locations within said complex and promotional information associated with said one or more locations;
Displaying said one or more locations graphically on said rendering, along with said promotional information associated with said one or more locations;
Allowing said visitors to receive said location and said promotional information in either printed or electronic format; and
Allowing a client to update said promotional information displayed for said visitor.

2. A method of disseminating location and promotional information associated with specific locations within a building complex, comprising:
Identifying a visitor to a building complex using a unique identifying credential;
Displaying to said visitor a dynamic computer-generated rendering of said building complex and at least one list containing a plurality of pre-defined search parameters, said pre-defined search parameters being selected for said visitor on prior search parameter selections stored in a master database.

3. The method of one of claims 1 or 2, wherein said rendering of said complex is three-dimensional.

4. The method of one of claims 1 or 2, wherein said rendering of said complex is two-dimensional.

5. The method of one of claims 1 or 2, wherein said pre-defined search parameters include categories.

6. The method of one of claims 1 or 2, wherein said pre-defined search parameters include keywords.

7. The method of one of claims 1 or 2, wherein said pre-defined search parameters include promotions.

8. The method of one of claims 1 or 2, wherein said pre-defined search parameters include individual locations.

9. The method of one of claims 1 or 2, wherein said pre-defined search parameters include individual names of tenants of said complex.

10. The method of one of claims 1 or 2, wherein said promotional information includes building complex emergency evacuation information.

11. The method of one of claims 1 or 2, wherein computer terminals remotely located from a master database and connected to said master database via a network permit a client to update said promotional information displayed for said visitor.

12. The method of claim 11, wherein said network is a wide area network.

13. The method of claim 11, wherein said network is a local area network.

14. The method of claim 11, wherein said network is the Internet.
